# EUROPEAN PATENT APPLICATION

(11) **EP 1 903 628 A2**
(43) Date of publication of application: **26.03.2008**
(21) Application number: 07115814.1
(22) Date of filing: 06.09.2007
(51) Int. Cl.: H01M 4/58, H01M 10/40, H01M 12/00, H01G 9/00, C04B 35/83

(54) **A Negative Electrode Active Material for an Electricity Storage Device and Method for Manufacturing the Same**

(30) Priority: 06.09.2006 JP 2006241105
(71) Applicant: Fuji Jukogyo Kabushiki Kaisha, Tokyo 160-8316 (JP)
(72) Inventor: Kojima Tasaki, Kenji, Tokyo 160-8316 (JP); Ando, Nobuo, Tokyo 160-8316 (JP)
(74) Representative: Sajda, Wolf E.

(57) **Abstract**

The invention provides a negative electrode active material for an electricity storage device, which has considerably enhanced low-temperature characteristics, increased energy density, and increased output power. A negative electrode active material is made of a carbon composite containing carbon particles as a core and a fibrous carbon having a graphene structure, which is formed on the surfaces and/or the inside of the carbon particles, wherein the carbon composite has a volume of all mesopores within 0.005 to 1.0 cm³/g, and a volume of the mesopores each with a pore diameter ranging from 100 to 400 Å of not less than 25% of the volume of all mesopores.

## Description

### BACKGROUND OF THE INVENTION

### 1. Field of the Invention

The present invention relates to a negative electrode active material for an electricity storage device of which the electrolyte solution is an aprotic organic solvent containing a lithium salt, and a method for manufacturing the same.

### 2. Description of the Related Art

A lithium-ion secondary battery of which the electrolyte solution is an aprotic organic solvent containing a lithium salt has been used for portable devices such as mobile phones and laptop computers as an electricity storage device having excellent features of high energy density and high output characteristic.

Recently, a lithium-ion capacitor as an electricity storage device of a hybrid type which is a combination of a lithium-ion secondary battery technology and the electricity storage principle of the electric double layer capacitor, has also attracted attention.

The lithium-ion capacitor is an electricity storage device designed aiming at remarkably increasing the energy density in a manner that a carbonaceous material, which allows lithium ions to be doped thereinto and de-doped therefrom, is doped in advance with lithium ions by a chemical or electrochemical method, for example, by bringing the carbonaceous material into contact with metal lithium, thereby to lower a negative electrode potential and to increase a withstand voltage. Studies have been made of the feasibility of applying the lithium-ion capacitor to hybrid vehicles and electric vehicles.

A carbonaceous material is mainly used for a negative electrode active material of the electricity storage device such as the lithium-ion secondary battery and the lithium-ion capacitor. The properties of the carbonaceous material are also affected by a crystal structure, for example, presence or absence of its graphite structure, and further by its pore structure. Japanese Domestic Re-Publication No. 2000/11688 discloses an electrode material in the form of mesoporous carbon particles with a specific pore diameter and pore volume. The use of such mesoporous carbon particles will produce excellent output characteristic of the resultant device.

It is expected that carbon fibers such as carbon nanotubes are applied to electrodes since the carbon fibers are high in conductivity and in electrolyte-retaining property. The fibrous carbon has strong cohesion and small bulk density, is expensive, and contains much impurities. For this reason, it has been believed that it is difficult to use the fiber carbon singly, and it is common practice to use the fiber carbon as an additive.

JP-A-2006-117 461 discloses a material formed by compositing carbon nanofibers with a phenol resin and carbonizing the resultant.

To apply the lithium-ion secondary battery or the lithium-ion capacitor to a driving power source for automobiles, for example, the battery or the capacitor is required to have high output characteristic and low-temperature characteristic. An electrode material formed by the technique disclosed in Japanese Domestic Re-Publication No. 2000/11688 will be considered to be an active material which has mesopores of proper sizes, high output characteristic, and excellent low-temperature characteristic. To use the battery or the capacitor as an automobile driving power source, however, it is required that the output characteristic and the low-temperature characteristic are further enhanced.

For this reason, to enhance the output characteristic and the low-temperature characteristic of the conventional electrode material, it is necessary, when the electrode is manufactured, to add a predetermined amount of a conductive material such as acetylene black or Ketjen black to the electrode material, with the intention of enhancing the conductivity and the electrolyte-retention property.

The addition of the conductive material decreases a volume ratio and a weight ratio of the negative electrode active material in the electrode when the volume or the weight of the whole electrode is fixed. Therefore, it is not preferable to add the conductive material in light of the energy density of the whole cell.

Such a conductive material is apt to cohere and has poor dispersibility to possibly lower the electrode density. As a result, an energy density per unit volume is decreased or the conductivity of such a level as indicated by an expected value is not given to the electrode.

A thickening dispersant such as carboxymethyl cellulose (CMC) is usually added to the conductive material to be added to the electrode material for the purpose of increasing its dispersibility. Such a thickening dispersant, when added, may increase resistance of the conductive material. This effect produced by the thickening dispersant reduces enhancement of conductivity by the conductive material. In this respect, it is required that the least quantity of the conductive material added produces the largest electrical conduction effect.

In JP-A-2006-117 461, vapor-grown carbon fibers (VGCF's) are composed with a phenol resin and the resultant is heat treated into a composite carbonized material. This technology is still unsatisfactory in achieving the high output power of the device.

Based on the prior arts stated above, research and development were made concentrating the effort on the analysis, particularly of the pore structure of the carbonaceous material. As the result of the research and development effort, it has been found that a carbon composite containing a mesoporous structure and a fibrous carbon having a graphene structure, exhibits excellent properties.

An object of the present invention, which based on this discovery, is to provide a negative electrode active material for an electricity storage device, which has improved low-temperature characteristic, increased energy density and increased output power.

### SUMMARY OF THE INVENTION

Our research and development effort had led us to reach the following technical idea which could achieve the object of the invention.

A negative electrode active material for an electricity storage device of which the electrolyte solution is an aprotic organic solvent containing a lithium salt is a carbon composite containing carbon particles as a core and a fibrous carbon having a graphene structure, which is formed on the surfaces and/or the inside of the carbon particles, wherein the volume of all mesopores of the carbon composite is 0.005 to 1.0 cm³/g, and the volume of the mesopores, each with a pore diameter ranging from 100 to 400 Å, is 25% or more of the volume of all mesopores.

In the invention, a carbonaceous negative electrode active material is a carbon composite which contains carbon particles and a fibrous carbon having a graphene structure, and has specific mesopores, whereby an electricity storage device using such an active material is enhanced in the low-temperature characteristic and the energy density, and has high output power.

The present invention may be summarized as follows.

According to one aspect of the present invention, there is provided a negative electrode active material for an electricity storage device of which the electrolyte solution is an aprotic organic solvent containing a lithium salt is a carbon composite containing carbon particles as a core and a fibrous carbon having a graphene structure, which is formed on the surfaces and/or the inside of the carbon particles, wherein the volume of all mesopores of the carbon composite is 0.005 to 1.0 cm³/g, and the volume of the mesopores, each with a pore diameter ranging from 100 to 400 Å, is 25% or more of the volume of all mesopores.

In the negative electrode active material, the amount of fibrous carbon preferably ranges from 1% to 50% by weight of the carbon composite.

A specific surface area of the carbon composite is preferably within a range from 0.01 to 2000 m²/g.

The carbon particles are made of at least one of soft carbon, hard carbon, graphite, and a polyacene-based material.

The fibrous carbon preferably contains at least one of monolayer carbon nanotube, multilayer carbon nanotube, carbon nanofiber, carbon nanohorn, carbon microcoil, herringbone-type carbon fiber, and platelet-type carbon fiber.

The fibrous carbon is preferably a hollow carbon fiber having an outside diameter of 1 to 100 nm and has partitions like those of bamboo nodes.

It is preferable that the fibrous carbon has multiple walls and a herringbone structure in which its lattice image is slanted with respect to a fiber axis. It is preferable that the multiple walls are each 1 to 100 nm thick, and the number of walls is three or more.

The fibrous carbon is preferably formed by heat treating the carbon particles and/or their precursors at 600 °C to 2000 °C in the presence of a transition metal-containing compound. The transition metal is preferably nickel and/or iron.

The fibrous carbon thus formed is preferably formed from a gas as a raw material, which is generated during the heat treatment.

Alternatively, the fibrous carbon may be formed by directly feeding a hydrocarbon gas from outside of the system or by feeding a gas containing hydrocarbon by using a carrier gas.

It is preferable that the root part of the fibrous carbon is bonded to the core carbon particle and/or its root part is separated from but located near the core carbon particle. The transition metal particles may be wrapped in the tip of the fibrous carbon.

According to another aspect of the present invention, there is provided a method of manufacturing a negative electrode active material for an electricity storage device, wherein carbon particles and/or their precursors are heat treated at 600 °C to 2000 °C in the presence of a transition metal-containing compound. The transition metal is preferably nickel and/or iron.

According to still another aspect of the present invention, there is provided a lithium-ion secondary battery, wherein the negative electrode active material for the electricity storage device described above is used for a negative electrode active material, and an electrolyte solution is an aprotic organic solvent containing a lithium salt.

According to another aspect of the present invention, there is provided a lithium-ion capacitor in which a positive electrode active material which allows lithium ions and/or anions to be reversibly doped thereinto and de-doped therefrom is used for a positive electrode active material, the negative electrode active material for the electricity storage device described above is used for a negative electrode active material, an electrolyte solution is an aprotic organic solvent containing a lithium salt, and a negative electrode and/or a positive electrode are pre-doped with lithium ions so that after the positive electrode and the negative electrode are short-circuited, potentials of the positive electrode and the negative electrode are each 2 V (relative to Li/Li+) or lower.

In the negative electrode active material for the electricity storage device according to the invention, a carbonaceous negative electrode active material is a carbon composite which contains carbon particles and a fibrous carbon having a graphene structure, and the carbon composite has specific mesopores, whereby an electricity storage device using such an active material is enhanced in the output characteristic and the low-temperature characteristic. Since the fibrous carbon is present, there is no need of adding a conductive material such as acetylene black. Accordingly, the electrode resistance is reduced, and as a result, the energy density of the electricity storage device is increased.

Using the negative electrode active material according to the invention makes it possible to provide an electricity storage device such as the lithium-ion secondary battery and the lithium-ion capacitor, having high energy density and high output power, and excellent low-temperature characteristic.

### BRIEF DESCRIPTION OF THE DRAWINGS

- FIG. 1: is an SEM photograph entirely showing a carbon composite particle according to Example 1;
- FIG. 2: is a lattice image of a tip of a fibrous carbon of the carbon composite particle according to Example 1; and
- FIG. 3: is a TEM photograph of the tip of the fibrous carbon of the carbon composite particle according to Example 1.

### DETAIL DESCRIPTION OF THE EMBODIMENTS

The present invention will be described in detail hereunder.

A negative electrode active material for an electricity storage device according to the present invention is a carbon composite containing carbon particles as a core and a fibrous carbon having a graphene structure, which is formed on the surfaces and/or the inside of the carbon particles. The volume of all mesopores of the carbon composite is 0.005 to 1.0 cm³/g, and the volume of the mesopores, each with a pore diameter ranging from 100 to 400 Å, is 25% or more of the volume of all mesopores.

The mesopores referred to here are pores with diameters between 20 to 500 Å according to the pore classification defined by IUPAC. According to the pore classification, the pores of less than 20 Å are micropores, and the pores of greater than 500 Å are macropores.

In describing the present invention, the volume of mesopores is determined by analyzing nitrogen desorption isotherm of the mesopores material at 77K by the DH (Dollimore - Heal) method.

The carbon composite has specific mesopores, and the volume of all mesopores of the carbon composite is 0.005 to 1.0 cm³/g. When the volume of all mesopores is less than 0.005 cm³/g, the mobility of the lithium ions lowers and the ion conductivity lowers. Accordingly, it is difficult for a lithium ion concentration in the vicinity of the interface of the carbon composite with the negative electrode active material to vary to follow a lithium ion concentration as a whole when the cell is under conditions of high output or low temperature. When the volume of all mesopores exceeds 1.0 cm³/g, on the other hand, the true density of the carbon composite lowers and capacity of the capacitor lowers. To avoid this, it is preferable that the volume of all mesopores is selected to be within a range from 0.006 to 0.8 cm³/g.

In the carbon composite, the volume of the mesopores each with a pore diameter ranging from 100 to 400 Å is 25% or more of the volume of all mesopores. When the volume of the mesopores of such pore diameters is less than 25% of the volume of all mesopores, the mobility of lithium ions or solvated lithium ions lowers and the ion conductivity lowers, which is not preferable. The larger the percentage of the mesopores of such pore diameters is, the better it is. Its preferable percentage is less than about 90% when the presence of the mesopores each with pore diameters of 400 to 500 Å is taken into consideration. More preferably, it is within a range from 30 to 80% of the volume of all mesopores.

The mesopores may be formed in a process to be described later in which a transition metal compound is added to a carbon raw material and heat treated. The mesopores may also be formed by directly blowing a hydrocarbon gas into a carbon raw material inherently having mesopores or micropores from the outside of the system in the heat treatment process, or blowing a gas containing hydrocarbon into the carbon raw material by using a carrier gas.

A particle size of the carbon composite is not particularly limited, but usually within a range from 0.5 to 30 µm in average. When the average particle size of the carbon composite is less than 0.5 µm, the particles are bulky, so that the electrode density is small and the energy density per unit volume tends to lower. Further, much binder must be used for bonding the particles to possibly increase the internal resistance. When the average particle size of the carbon composite exceeds 30 µm, on the other hand, it is difficult to thin the electrode in design. When the lithium ions solvated in the carbon composite disperse and move into and out of the carbon composite through the pores, the ion movement is slow. In this respect, the average particle size is within a range from 0.5 to 10 µm, more preferably 0.5 to 5 µm.

Further, it is preferable that the amount of the fibrous carbon preferably ranges from 1% to 50% by weight of the carbon composite. When its amount is less than 1% by weight of the carbon composite, the following useful effects are not sufficiently produced: the resistance reduction owing to the presence of the fibrous bodies on the surface and/or the inside of the carbon composite, and the coulombic efficiency enhancement. When it exceeds 50% by weight of the carbon composite, on the other hand, the amount of fibers is too large and their dispersion is insufficient. As a result, the fibers agglutinate to form balls of pills, and their bulk density is small and the electrode density is small.

A specific surface area of the carbon composite is preferably within a range from 0.01 to 2000 m²/g. When the specific surface area of the carbon composite is less than 0.01 m²/g, a liquid retaining amount of the electrolyte solution is insufficient and the resistance of the carbon composite is large. When the specific surface area of the carbon composite exceeds 2000 m²/g, on the other hand, the coulombic efficiency lowers when the charging and discharging operations are repeated. The specific surface area is 0.1 to 1000 m²/g, and more preferably 0.1 to 500 m²/g. In the embodiment, the specific surface area is obtained by the BET method.

In the thus constructed negative electrode active material for the electricity storage device according to the invention, the fibrous carbon has a graphene structure, whereby the contact resistance between the core carbon particles reduces. Further, the fibrous carbon is present near the carbon particles having specific mesopores. In this structure, the electrolyte retaining property of the electrolyte solution at the carbon particle interface(s) and the ion conductivity are improved, and the charge movement resistance and the diffusion resistance are small. As a result, it is predicted that the output characteristic and the low-temperature characteristic of the electricity storage device are improved.

The negative electrode active material according to the present invention is used for an electricity storage device of which the electrolyte solution is an aprotic organic solvent containing a lithium salt. It is required that the carbon composite to be used as the negative electrode active material allows lithium ions to be reversibly doped thereinto. For this reason, it is preferable that the carbon particles, which form the core of the carbon composite, are made of a material which allows lithium ions to be stably doped thereinto and de-doped therefrom. Specific examples of the materials of the carbon particles include soft carbon such as petroleum coke, coal pitch coke or polyvinyl chloride carbon, hard carbon such as phenol resin carbon or furan resin carbon, and graphite or polyacene-based material.

Before proceeding with description of the invention, definitions of the terms to be used in the description to follow will be described, for clarity of understanding. The term "dope" involves "occlude", "carry", "absorption" or "insert", and specifically means a phenomenon where lithium ions or anions enter a positive electrode active material or lithium ions enter a negative electrode active material. The term "de-dope" involves "desorb" or "release", and specifically means a phenomenon where lithium ions or anions desorb from a positive electrode active material or lithium ions desorb from a negative electrode active material.

The carbon composite to be the negative electrode active material according to the invention may be formed in a manner that the carbon particles and/or their precursors are heat treated in the presence of a transition metal-containing compound in a reaction furnace while an inert gas such as nitrogen is introduced into the system.

The heat treatment temperature is preferably 600 °C to 2000 °C although its optimum temperature varies depending on the kind and the amount of the transition metal compound used. When the heat treatment temperature is less than 600 °C, the formed carbon composite has a pore distribution consisting mainly of micropores and is not a carbon composite having desired mesopores. Also when the heat treatment temperature exceeds 2000 °C, there is no further formation of mesopores or generation of the fibrous carbon. The fibrous carbon formation in this temperature region is not efficient. The heat treatment temperature is more preferably within a range from 800 °C to 1500 °C.

A flow rate of the inert gas in the heat-treatment process is preferably 0.01 to 20 L/min when the volume of the furnace is 10 L. When the inert gas flow rate is larger than 20 L/min, an insufficient amount of gas is stored in the reaction furnace. When the inert gas flow rate is smaller than 0.01 L/min, an acidic gas component contained in the generated gas is insufficiently discharged and the non-acidic atmosphere may be lost.

The amount of the transition metal-containing compound added is not limited to a specific amount in particular. In order that the transition metal-containing compound is uniformly dispersed to the carbon particles and their precursor and its reaction uniformly progresses, it is preferable that the amount of the compound added is selected to be within the saturation solubility to the solvent. About 1 to 30% by weight of the transition metal-containing compound (expressed in terms of metal) is used for the carbon particles and their precursors. When an amount of the transition metal-containing compound used is less than 1% by weight, the influence by the formation of the mesopores is small. This should be avoided. When the amount of the compound used exceeds 30% by weight, the transition metal-containing compound tends to precipitate, so that the reaction is not uniform.

In a process preceding to the heat treatment process, an aqueous solution or an organic solvent solution of ethanol, for example, in which the transition metal salt is dissolved or uniformly dispersed is uniformly impregnated into the carbon particles or their precursors, the solvent is evaporated and the resultant is dried. To prevent deformation of a concentration distribution of the transition metal salt having been impregnated into the carbon particles or their precursors when the solvent is evaporated, it is preferable that the solvent is slowly evaporated while the carbon particles or their precursors are uniformly heated by agitation, for example. In an alternative, the transition metal salt is directly mixed into the carbon particles or their precursors, and may be mechanically alloyed by means of a ball mill or the like.

After the heat treatment process, the resultant carbon composite may be directly used as a negative electrode active material, and if necessary, the resultant carbon composite may be subjected to acid pickling to remove excessive transition metal and transition metal compound. The "excessive transition metal and transition metal compound" means the transition metal or transition metal compound which may become ions or ions, i.e., bare transition metal or transition metal compound, and further involves such a case where the fibrous carbon wraps the transition metal, a transition metal-wrapping part of the fibrous carbon is cracked and the transition metal contained will become ions through the crack.

In a case where the transition metal is completely wrapped with the carbon, it is not removed by the acid pickling and remains on the surface of or inside the carbon composite. The acid pickling is usually carried out by washing the carbon composite several times with a 2NHCl solution at 60 °C to 80 °C.

Examples of the transition metal include iron, ruthenium, osmium, cobalt, rhodium, iridium, nickel, and copper. Particularly, nickel and/or iron is preferably used. A transition metal salt is preferably used for the transition metal-containing compound, and examples thereof include nitrate salt and sulfate salt. The preferable one is properly selected from those ones according to the solubility and the dispersibility to a solvent used and the like.

The fibrous carbon production by the heat treatment is carried out in the following way. The gas originated from the carbon particles or their precursors is carbonized into fibers from the transition metal-containing compound which is in contact with the carbon particles or their precursors, the compound serving as a core. Specifically, the fibrous carbon may be produced by a self CVD (chemical vapor deposition), which uses the gas generated in the heat treatment process, or to produce the fibrous carbon, a hydrocarbon gas, such as a toluene gas or a Xylene gas may be additionally supplied in the heat treatment process. The production of the fibrous carbon may be promoted by the CVD based on the supplied gas. When a sufficient amount of fibrous carbon is produced only by the self CVD, there is no need of additional supply of the hydrocarbon gas. This leads to production cost reduction.

The fiber carbon is preferably such a fibrous carbon that its root part directly rises from the core carbon particle. The fibrous carbon may be such a fibrous carbon that its root part is separated from the core carbon particle but is located near the core carbon particle. The transition metal particles are preferably wrapped in the tip of the fibrous carbon. The term "wrap", as described above, means such a state that the transition metal or the transition metal compound is completely wrapped with the carbon and hence, cannot become ions. The size of the transition metal particles is not limited to a specific one in particular, but normally it is preferably 1 to 100 µm, more preferably substantially within a range from 10 to 50 µm. A plurality of fiber carbons sometimes extend from the transition metal particle.

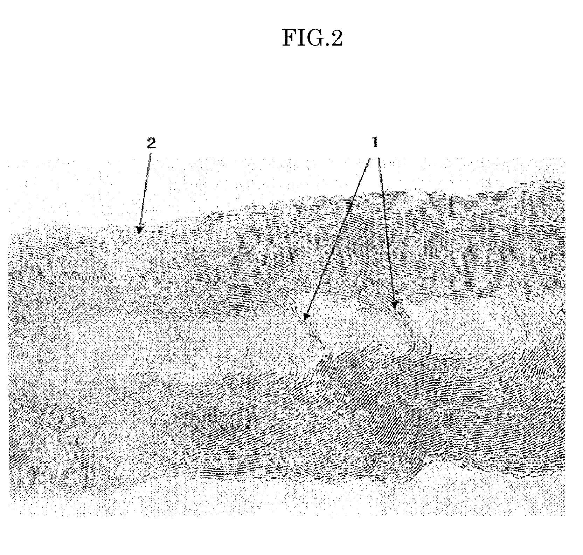

The fibrous carbon is preferably a hollow carbon fiber having an outside diameter of 1 nm to 100 nm and has partitions like those of bamboo. FIG. 2 shows a lattice image of a fibrous carbon produced by the self CVD process. The fibrous carbon is not a cylindrical fiber with a uniform diameter. As seen, it contains a distorted part and its outside diameter is about 40 nm. The outside diameter is normally within a range from 1 nm to 100 nm, preferably substantially within a range from 30 nm to 60 nm.

Although depending on the manufacture conditions, the diameter distribution in a relatively narrow range is obtained in some cases. The fibrous carbon is hollow, and its inside diameter is normally approximately 10 nm to 40 nm and will be affected by the size of the transition metal particle and the outside diameter.

The hollow part of the fibrous carbon has partitions 1 like bamboo nodes. The intervals each between the adjacent partitions are normally 5 to 20 nm, although the intervals are not necessarily constant. Since lattice images having several layers are observed at the partitions 1, it is considered that the hollow part is not completely partitioned in some cases. It is estimated that this part contributes to efficient and smooth doping and de-doping of lithium ions at low potential. It may function as a cluster of voids.

It is preferable that the fibrous carbon, as shown in FIG. 2, has multiple walls 2 and a herringbone structure in which its lattice image is not parallel to but slanted with respect to the fiber axis. In the case of the carbon nanotube, lithium ions cannot enter the inside of the carbon nanotube not having a defect. In the fibrous carbon of the herringbone type, the hollow part inside the fibrous carbon communicates with exterior. With such a structural feature, lithium ions smoothly move into and out of the fibrous carbon. There is a possibility that the lithium ions are stored in the lattices.

It is preferable that the multiple walls 2 are each 1 to 100 nm thick, and the number of walls is three or more. Assuming that the multiple walls are the places to be doped with lithium ions, the larger the number of the layers is, the larger the resultant capacity will be.

The fibrous carbon preferably has a graphene structure, and preferably contains at least one of monolayer carbon nanotube, multilayer carbon nanotube, carbon nanofiber, carbon nanohorn, carbon microcoil, herringbone-type carbon fiber, and platelet-type carbon fiber. When the fibrous carbon is used for the structure having the mesopores and its precursor, designers must take into account the conductivity, cohesiveness, electrolyte-retaining property, price and the like of the fiber.

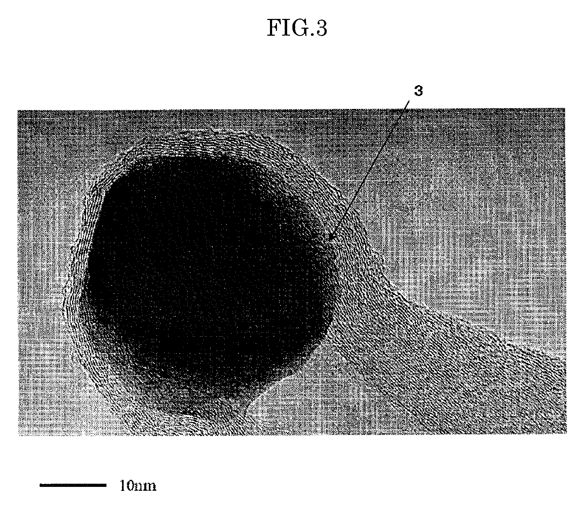

By the heat treatment process, the mesopores are formed and at the same time by the CVD process using the generated gas, fibrous carbon having a graphene structure is produced near the surface of the core carbon particles. The tip of the fibrous carbon sometimes wraps the transition metal particle 3 (black part) as shown in a TEM photograph (FIG. 3) in Example to be described later. In one type of the fibrous carbon, the root pat of the fibrous carbon is bonded to the core carbon particle. In another type of fibrous carbon, its root part is separated from but located near the core carbon particle.

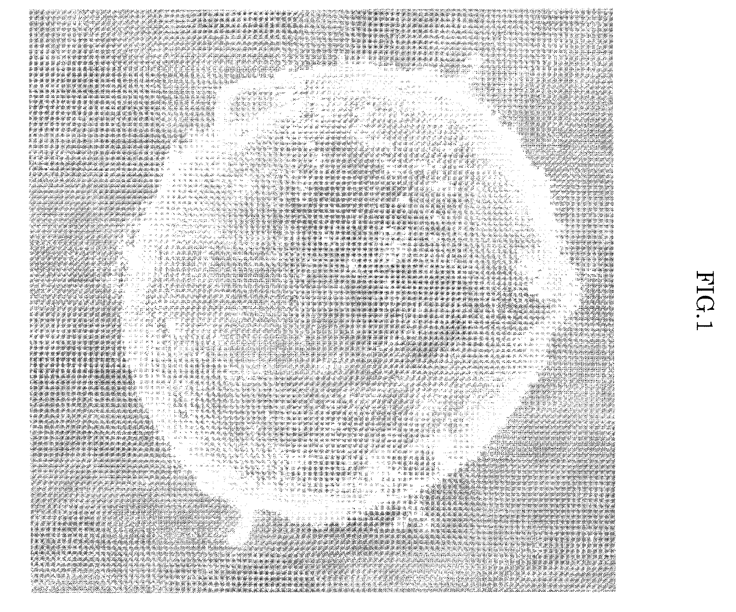

FIG. 1 shows an exemplary entire image of carbon composite particles according to the present invention. As seen from an SEM photograph of FIG. 1, fibrous carbons grow on the surfaces of core carbon particles. A number of pores reaching into the inside of the particles are also observed. After the carbon composite particles are embedded and microtomed, a cut surface of the carbon composite thus processed is SEM observed. Then, it is observed that a great number of mesopores are present in the particle.

A negative electrode using the negative electrode active material according to the present invention may be manufactured by a method usually used. Specifically, the negative electrode active material, a binder and, if necessary, a conductive material and a thickening agent such as CMC are added to water or an organic solvent and mixed together to obtain a slurry. The obtained slurry is coated over a current collector substrate or is molded into a sheet and the sheet is stuck onto the current collector substrate. In this way, the negative electrode is manufactured.

Usable examples of the binder include a rubber-based binder such as SBR, a fluorine contained resin such as polyethylene tetrafluoride or polyvinylidene fluoride, a thermoplastic resin such as polypropylene or polyethylene, and an acrylic resin. An amount of the binder added is normally within 2 to 40% by weight of the negative electrode active material although it varies depending on an electric conductivity of the negative electrode active material, the electrode shape, and the like.

Examples of the conductive material include acetylene black, graphite, carbon nanotube, and metal powder. The negative electrode active material according to the invention has improved conductivity since the carbon composite forming the active material has the unique structure as mentioned above. Therefore, addition of the conductive material is not essential.

The current collector substrate for supporting the negative electrode active material may be made of a metal as a conductive active material, a metal oxide, carbon or the like. Particularly, copper, nickel, carbon, gold or an alloy of those materials is preferable for the current collector substrate. A configuration of the substrate is not particularly limited. The current collector has a large contact area with the negative electrode active material. Therefore, the substrate has preferably an irregular surface or through holes reaching the obverse and reverse sides of the substrate.

Examples of the electricity storage device using the negative electrode active material according to the invention include a lithium-ion secondary battery, a hybrid capacitor, and a lithium-ion capacitor. Each of those electricity storage devices uses as an electrolyte solution an aprotic organic solvent containing a lithium salt. Examples of the aprotic organic solvent include ethylene carbonate, propylene carbonate, diethyl carbonate, γ-butyrolactone, acetonitrile, dimethoxyethane, tetrahydrofulan, dioxolan, methylene chloride, and sulfolane. A mixed solution having at least two types of these aprotic organic solvents can also be used.

The lithium salt of the electrolyte may be any of LiClO₄, LiAsF₆, LiBF₄, LiPF₆ and the like. A concentration of the electrolyte solution is preferably 0.1 mol/L or more, more preferably within a range from 0.5 to 1.5 mol/L, in order to reduce the internal resistance.

In the lithium-ion secondary battery according to the invention, the positive electrode active material is not limited to a specific one in particular, but may be a lithium-containing composite oxide which allows lithium ions to electrochemically be doped thereinto and de-doped therefrom, a transition metal oxide such as manganese, nickel and vanadium or a transition metal sulfide, or a conductive polymer such as polyaniline, which allows anions, e.g., tetrafluoroborate, to be reversibly doped thereinto and de-doped therefrom.

In the hybrid capacitor or lithium-ion capacitor using the negative electrode active material according to the invention, an active material which allows lithium ions and/or anions, for example, tetrafluoroborate, to be reversibly doped thereinto and de-doped therefrom, is used for the positive electrode active material. Such a positive electrode active material is, for example, activated carbon powder, and an average particle diameter D50 of the activated carbon is preferably 2 µm or larger, more preferably 2 to 50 µm, and most preferably within a range from 2 to 20 µm. The average pore diameter of the positive electrode active material is 10 nm or smaller, and the specific surface area thereof is preferably 600 to 3000 m²/g, and more preferably 1300 to 2500 m²/g. The positive electrode using such a positive electrode active material may be manufactured in a manner similar to that of the negative electrode.

A preferable electric storage device, which uses the negative electrode active material of the invention, is, for example, a lithium-ion capacitor configured such that a negative electrode and/or a positive electrode are pre-doped with lithium ions so that after the positive electrode and the negative electrode are short-circuited, a potential of the positive electrode is 2.0 V (relative to Li/Li+) or lower. The lithium-ion capacitor is used particularly for large current charging and discharging. The lithium-ion capacitor has high energy density, high output power and excellent low-temperature characteristic, in addition to the operation of the negative electrode active material according to the invention.

Particularly, the negative electrode active material of the invention has specific mesopores, and its conductivity is also increased through the operation of the fibrous carbon. In this respect, it is effective for the electricity storage device for high output power use.

In the lithium-ion capacitor, the wording "after the positive electrode and the negative electrode are short-circuited, the potential of the positive electrode is 2.0 V (relative to Li/Li+) or lower" means that the potential of the positive electrode is 2.0 V (relative to Li/Li+) or lower when after either of the following two cases (A) and (B) ends, the short-circuiting is removed and the potential of the positive electrode is measured within 0.5 to 1.5 hours:
(A) After the doping of lithium ions, a positive terminal and a negative terminal of the lithium-ion capacitor are directly coupled with each other by means of a conductor, and this state is left to stand for 12 hours or longer; and
(B) By using a charging/discharging tester, the capacitor is discharged to 0 V at a constant current for 12 hours or longer. The positive electrode potential value may be a potential value measured not only immediately after the doping of lithium ions but also in any of a charging state, a discharging state and after the charging and discharging operations are repeated.

In the lithium-ion capacitor, the negative electrode and/or the positive electrode are pre-doped with lithium ions, so that after the positive electrode and the negative electrode are short-circuited, a potential of the positive electrode is 2.0 V (relative to Li/Li+) or lower, whereby the utilization capacity of the positive electrode increases, capacity of capacitor increases, and high energy density is obtained. With increase of an amount of the lithium ions doped, the positive electrode potential after the short-circuiting between the positive electrode and the negative electrode becomes low, and the energy density becomes high.

To secure higher energy density, the positive electrode potential after the short-circuiting between the positive electrode and the negative electrode is preferably 1.5 V (relative to Li/Li+) or lower, more preferably 1.0 V (relative to Li/Li+) or lower. When the positive electrode potential is below 1.0 V (relative to Li/Li+), unwanted situations such as gas generation and irreversible consumption of lithium ions occur although it depends on the positive electrode active material, and it is difficult to measure the positive electrode potential. When the positive electrode potential is too low, the electrode weight of the negative electrode is too large, and the energy density lowers. Generally, the positive electrode potential is preferably 0.1 V (relative to Li/Li+) or higher, more preferably 0.3 V or higher.

When the amount of lithium ions doped into the positive electrode and/or the negative electrode is small, the positive electrode potential after the positive electrode and the negative electrode are short-circuited exceeds 2.0 V (relative to Li/Li+), and the energy density of the lithium-ion capacitor lowers.

The lithium ions may be doped into the negative electrode and/or the positive electrode. For example, when the activated carbon is used for the positive electrode active material, the amount of the lithium ions doped becomes large, and when the positive electrode potential becomes low, unwanted situations such as irreversible consumption of the lithium ions occur.

The amount of lithium ions to be doped into the negative electrode and/or the positive electrode is selected so as not to cause such unwanted situations, while the electrode active material of the electrode or electrodes is taken into account. In the invention, the control of the amount of lithium ions to be doped to both the positive electrode active material and the negative electrode active material makes the process complicated. To avoid this, the lithium ions are preferably doped only to the negative electrode active material.

In the lithium-ion capacitor, particularly a capacitance of the negative electrode active material per unit weight is three times or higher than a capacitance of the positive electrode active material per unit weight, and the weight of the positive electrode active material is larger than that of the negative electrode active material. As a result, the lithium-ion capacitor of high voltage and high capacity is provided.

As described above, when the negative electrode of which the capacitance per unit weight is larger than that of the positive electrode, is used, the weight of the negative electrode active material may be reduced without changing a potential change quantity of the negative electrode. Accordingly, the filling quantity of the positive electrode active material becomes large, and the capacitance and the capacity of the lithium-ion capacitor may be increased.

The weight of the positive electrode active material is preferably larger than that of the negative electrode active material, preferably 1.1 to 10 times of the latter. When the weight ratio is less than 1.1 times, the capacitance difference is small. When it exceeds 10 times, the capacitance is sometimes small. Further, a thickness difference of the negative electrode and the positive electrode is too large. Both the cases are not desirable in the light of the construction of the lithium-ion capacitor.

For example, the lithium-ion capacitor comes in two varieties: one is of a tubular type in which a strip-like negative electrode and a separator are wound, and the other is of a film type in which a lamination unit in which at least three layers of platelike positive electrodes and negative electrodes are layered in a state that separators are each interposed between the adjacent electrodes, is sealed in an outer jacket film. The structure of the lithium-ion capacitor has been disclosed in JP-A-2004-266 091 and the like. The lithium-ion capacitor according to the present invention may also take a similar construction to that of the conventional one.

### EXAMPLES

The present invention will be described in more details by using examples. It should be understood that the invention is not limited to the examples to be described hereunder.

### Carbon Composite Manufacturing and Physical Properties Evaluation

### Example 1

An ethanol solution was prepared by dissolving 5% by weight of nickel nitrate hexahydrate (expressed in terms of nickel metal) relative to the weight of a carbon particle precursor. A particulate phenol resin (Bellpearl R800, manufactured by Air Water Corporation) as the carbon particle precursor having an average particle size D50 of 18 µm was put as a raw material into the ethanol solution and agitated to obtain a slurry. The thus obtained slurry was heated at 70 °C while being agitated to evaporate ethanol, whereby a precursor was produced.

The obtained precursor was placed in a batch type electric furnace (inner volume = 10 L), heated up to 1000°C over 3 hours at a nitrogen flow rate of 0.2 L/min, and held for 2 hours, followed by being stood to cool. To remove excessive nickel from the obtained particles, the precursor was subjected to acid pickling at 80 °C for 3 hours by using a 2NHC1 solution. The acid pickling was repeated five times. The particles were dried and then crushed by a ball mill to obtain a carbon composite Sample 1 having an average particle diameter D50 of 5 µm (Example 1).

The Sample 1 obtained was SEM observed (x 10000 magnification). From the observation, it was confirmed that the Sample 1 was a carbon composite with a fibrous carbon present near the surface of its carbon particle. FIG. 1 shows an SEM photograph of an overall carbon composite particle. FIG. 2 shows an observed photograph showing a lattice image of the fibrous carbon generated. The fibrous carbon shown by the photograph of FIG. 2 is hollow with an outside diameter of about 40 nm, and its hollowed part has partitions 1.

Unlike the normal carbon nanotube, the fibrous carbon has a herringbone structure in which it has a multiple of wall parts (multiple walls) 2 and its lattice image is not parallel to but slanted with respect to the fiber axis, and many distorted parts are present. FIG. 3 shows a TEM photograph of the tip of the fibrous carbon. From the photograph of FIG. 3, it was confirmed that the fibrous carbon had a graphene structure, and that a nickel metal particle 3 was wrapped in the tip of the fibrous carbon.

It was confirmed that a specific surface area of the carbon composite, obtained by the BET method, was 33 m²/g, and that as the result of analyzing a nitrogen desorption isotherm by the DH (Dollimore-Heal) method, a volume of all mesopores of the carbon composite was 0.081 cm³/g, and a volume of the mesopores with pore diameters ranging from 100 to 400 Å was 47% of the volume of all mesopores. The measurement of the weight of the generated fibrous carbon showed that it was 10.5% by weight of the carbon composite.

### Comparative Examples 1 and 2

A Sample 2 (Comparative Example 1) and a Sample 3 (Comparative Example 2) were manufactured in the same manner as in Example 1 except that the nitrogen flow rate in the heat treatment process was 25 L/min and the heat treatment temperature was 500°C.

### Example 2

10.5% by weigh of monolayer carbon nanotubes was added to the Sample 2 obtained in Comparative Example 1, and mechanically alloyed by a ball mill, whereby a Sample 4 was manufactured.

### Example 3

As in Example 1, the Sample 2 obtained in Comparison Example 1 was placed as the precursor in a batch type electric furnace (inner volume = 10 L) and heated up to 1000°C over 3 hours at a nitrogen flow rate of 2 L/min, and nitrogen was bubbled into a toluene solution to thereby carry out a CVD process to secure the weight ratio of the fibrous carbon being equal to that of the Sample 1. The subsequent process was carried out in the same manner as in Example 1 to form a Sample 5.

### Examples 4 to 6

Samples 6 to 8 (Examples 4 to 6) were manufactured in the same manner as in Example 1 except that the heat treatment temperature was 800°C and the nitrogen flow rate was 1 L/min, in the same manner as in Example 1 except that the heat treatment temperature was 1500°C and the nitrogen flow rate was 1 L/min, and in the same manner as in Example 1 except that iron nitrate nonahydrate salt was used in place of nickel nitrate hexahydrate salt, respectively.

Manufacturing conditions and physical property values of the Samples 1 to 8 (Examples 1 to 6 and Comparative Examples 1 and 2) are shown in Table 1.

**Table 1**

| | Heat treatment temperature (°C) | Nitrogen flow rate (L/min) | Specific surface area (m²/g) | Volume of all mesopores (cm³/g) | 100 to 400 Å mesopores (%) | Fibrous carbon (wt.%) |
|---|---|---|---|---|---|---|
| Sample 1 (Example 1) | 1100 | 0.2 | 33 | 0.081 | 47.1 | 0.5 |
| Sample 2 (Comparative Example 1) | 1100 | 25.3 | 4 | 0.082 | 48 | 0 |
| Sample 3 (Comparative Example 2) | 500 | 0.2 | 95 | 0.004 | 23 | 0.5 |
| Sample 4 (Example 2) | - (1100) | - (25) | 32 | 0.081 | 46.1 | 0.5 |
| Sample 5 (Example 3) | 1000 (1100) | 2 (25) | 5 | 0.072 | 50.1 | 0.5 |
| Sample 6 (Example 4) | 800 | 1.0 | 68 | 0.007 | 31 | 3.3 |
| Sample 7 (Example 5) | 1500 | 1.0 | 29 | 0.077 | 50.1 | 1.2 |
| Sample 8 (Example 6) | 1100 | 0.2 | 40 | 0.129 | 41.1 | 0.3 |

As shown in Table 1, it was confirmed from Example 1 and Comparison Example 1 that a carbon composite with fibrous carbon growing near the core carbon particle having mesopores could be obtained by controlling the nitrogen flow rate. It was confirmed from Comparative Example 2 and Examples 4 and 5 that when the reaction temperature was 1100 °C or higher, the mesopores had sufficiently grown, but when it was 500 °C, formation of the mesopores had insufficiently progressed. It was confirmed from Example 3 that when toluene was gasified and fed into the furnace and heat-treated, fibrous carbon was generated and the specific surface area became small.

It was confirmed from Example 6 that also in the Sample 8 in which iron nitrate salt was added and heat-treated, a carbon composite in which the fibrous carbon had grown near the core carbon particle having mesopores was obtained, and the effect produced was comparable with that in the case of using the nickel nitrate salt.

### Negative Electrode Manufacturing and Physical Properties Evaluation

### Examples 7 to 12 and Comparative Examples 3 and 4

4 parts by weight of an acrylate copolymer binder, 2 parts by weight of CMC, and 200 parts by weight of ion exchanged water were added to 92 parts by weight of the Samples 1 to 8, and the mixtures were sufficiently mixed by a mixing/agitating machine to obtain negative electrode slurries 1 to 8. Each of the thus obtained negative electrode slurries 1 to 8 was coated over the surface of a copper foil of 18 µm thick in the amount of 2.5 mg/cm² as a weight of a solid per unit area, and vacuum-dried at 150°C for 20 hours to obtain a negative electrode. The negative electrode was cut out into negative-electrode foil electrodes 1 to 8 each having a size of 2.4 cm x 3.8 cm. Measurement results of an electrode density and an electric conductivity as physical properties of each electrode manufactured are shown in Table 2.

**Table 2**

| | Negative-electrode foil electrode (Negative electrode active material) | Electrode density (g/cm³) | Electric conductivity (S·cm⁻¹) |
|---|---|---|---|
| Example 7 | 1 (Sample 1) | 0.83 | 0.113 |
| Comparative Example 3 | 2 (Sample 2) | 0.62 | 0.061 |
| Comparative Example 4 | 3 (Sample 3) | 0.67 | 0.001 |
| Example 8 | 4 (Sample 4) | 0.78 | 0.105 |
| Example 9 | 5 (Sample 5 ) | 0.82 | 0.111 |
| Example 10 | 6 (Sample 6) | 0.74 | 0.080 |
| Example 11 | 7 (Sample 7) | 0.84 | 0.117 |
| Example 12 | 8 (Sample 8) | 0.81 | 0.112 |

Comparison is made among the physical properties of the negative-electrode foil electrodes using the Samples 1, 4 and 2, which are different only in the presence or absence of the fibrous carbon but have substantially equal pore characteristics of the negative electrode active materials. As seen from Table 2, the negative-electrode foil electrode 1 (Example 7) and the negative-electrode foil electrode 4 (Example 8) are both larger in electrode density than the negative-electrode foil electrode 2 (Comparative Example 3).

This would be due to the facts that a density of the core carbon particles has increased by the CVD effect of the generated reaction gas, and that the fibrous carbon has a graphene structure and a large true specific gravity. The electric conductivity of the former is about two times of that of the latter. This would result from the fact that presence of the fibrous carbon having high conductivity makes contact resistance between the carbon particles low. The electrode density of the negative-electrode foil electrode 4 (Example 8) is somewhat smaller than that of the electrode density of the negative-electrode foil electrode 1 (Example 7).

This is because while the fibrous carbon of the Sample 1 is directly formed on the core carbon particles in the heat treatment process, the fibrous carbon of the Sample 4 is added later and mixed, so that the dispersibility in the process of forming the slurry is low. The electric conductivity of the negative-electrode foil electrode 4 (Example 8) is somewhat smaller than that of the negative-electrode foil electrode 1 (Example 7). This also arises from the dispersibility.

From the negative-electrode foil electrode 3 using the Sample 3 (Example 4), the negative-electrode foil electrode 1 using the Sample 1 (Example 7), the negative-electrode foil electrode 6 using the Sample 6 (Example 10), and the negative-electrode foil electrode 7 using the Sample 7 (Example 11), it is seen that the higher the heat treatment temperature is, the higher the electrode density and the electric conductivity are. This would be due to the fact that the higher the heat treatment temperature is, the higher the electric conductivity of the core carbon particles per se is, and that as the density of the core carbon particles increases by the CVD effect of the generated reaction gas, the amount of fibrous carbon produced increases.

The Sample 5 used for the negative-electrode foil electrode 5 (Example 9) has the physical properties substantially equal to those of the Sample 1. Since the Sample 5 is obtained by applying the CVD process to the Sample 2 having no fibrous carbon, the specific surface area and the volume of all mesopores of the Sample are smaller than those of the Sample 1.

Even at a time point that the micropores of small pore sizes are filled earlier than the mesopores of large pore sizes by the CVD effect, and the fibrous carbon is impregnated up to the same ratio as of the Sample 1, about 90% of the original mesopores volume is left. In the case of the negative-electrode foil electrode 5 using the Sample 5 (Example 9), the electrode density and the electric conductivity thereof are both high as in the case of the negative-electrode foil electrode 1 (Example 7).

The Sample 8 used for the negative-electrode foil electrode 8 (Example 12) is the fibrous composite formed by using the iron nitrate nonahydrate salt in place of the nickel nitrate hexahydrate salt added to the Sample 1. The electrode density and the electric conductivity of the negative-electrode foil electrode are both high as in the case of the negative-electrode foil electrode 1 (Example 7). From this fact, it is understood that the iron produces effects comparable with those by the nickel.

### Effect When Conductive Material is Not Added

### Comparative Example 5

In order to increase the electrode density and the electric conductivity of the Sample 2, 10 parts by weight of acetylene black was added as a conductive material to the negative electrode slurry 2. A negative electrode slurry 9 was formed in the same manner as in Example 7 except that 2 parts by weight of CMC was increased to 4 parts by weight of CMC in order to sufficiently disperse acetylene black, and a negative-electrode foil electrode 9 (Comparative Example 5) was prepared. The results of evaluating active material ratio indicating a percentage of the active material in the electrode, electrode density and electric conductivity of Comparative Example 5 and Example 7, are shown in Table 3.

**Table 3**

| | Negative-electrode foil electrode (Negative electrode active material) | Active material ratio (wt. %) | Electrode density (g/cm³) | Electric conductivity (S·cm⁻¹) |
|---|---|---|---|---|
| Example 7 | 1 (Sample 1) | 93.9 | 0.83 | 0.113 |
| Comparative Example 5 | 9 (Sample 2) | 83.6 | 0.82 | 0.090 |

In Comparative Example 5, 10 parts by weight of acetylene black as a conductive material was added to Sample 2, and CMC was increased to increase the dispersibility of the conductive material. As a result, as seen from Table 3, the electrode density and the electric conductivity of Comparative Example 5 were superior to those of Comparative Example 3, but inferior to those of Example 7 (Sample 1).

The evaluation result may be explained such that the fibrous carbon of the Sample 1 effectively covers the core carbon particles and hence, the conductivity is high, and high dispersibility is obtained even if the addition amount of the CMC, which forms a factor to increase electrical resistance, is small. The evaluation showed that the active material ratio of the negative-electrode foil electrode 1 could be increased by about 10% from that of the negative-electrode foil electrode 9.

### Evaluation of Low-Temperature Characteristic of Negative Electrode

### Examples 13 to 18 and Comparative Examples 6 to 7

Laminate cells were assembled as follows. Each of the negative-electrode foil electrodes 1 to 8 was combined with a metal lithium, as a counter electrode of the foil electrode, having a thickness of 250 µm and the same size as of the foil electrode. A separator made of a polyethylene nonwoven fabric having a thickness of 50 µm was interposed between the adjacent electrodes, the counter electrode and the foil electrode. A metal lithium was used for a reference electrode. An electrolyte solution was a solution obtained by dissolving LiPF₆ at a concentration of 1 mol/L into a solvent mixture containing ethylene carbonate, diethyl carbonate and propylene carbonate at the weight ratio of 3:4:1.

Those laminate cells were left to stand at 25 °C and -20 °C for 24 hours. Subsequently, each cell was charged at a constant current of 3 mA till the cell voltage reached 20 mV. Then, the cells were discharged at a constant current of 3 mA till the cell voltage reached 1.0 V. The 20 mV to 1.0 V cycle was repeated and a discharging capacity of the cell was measured at the sixth cycle. The measurement results of the discharging capacity at 25 °C and -20 °C, and capacity retention ratios are tabulated in Table 4.

**Table 4**

| | Negative-electrode foil electrode (Negative electrode active material) | Discharging capacity (mAh/g) | | Capacity retention ratio (%) |
|---|---|---|---|---|
| | | 25 °C | -20 °C | |
| Example 13 | 1 (sample 1) | 268 | 127 | 47.4 |
| Comparative Example 6 | 2 (Sample 2) | 255 | 101 | 39.6 |
| Comparative Example 7 | 3 (Sample 3) | 132 | 23 | 17.4 |
| Example 14 | 4 (Sample 4) | 261 | 122 | 46.7 |
| Example 15 | 5 (Sample 5) | 267 | 125 | 46.8 |
| Example 16 | 6 (Sample 6) | 260 | 117 | 44.9 |
| Example 17 | 7 (Sample 7) | 266 | 124 | 46.5 |
| Example 18 | 8 (Sample 8) | 267 | 125 | 46.8 |

The results shown in Table 4 indicate the following fact. When the Sample 1 (Example 13), the Sample 2 (Comparative Example 6), and the Samples 4 to 8 (Examples 14 to 18) in which the volume of all the mesopores is within 0.005 to 1.0 cm³/g and the volume of the mesopores each with a pore diameter ranging from 100 to 400 Å is not less than 25% of the volume of all mesopores is compared with the Sample 3 (Example 7), a ratio of the discharging capacity at -20°C to the discharging capacity at 25°C in each of the Samples 1, 2, and 4 to 8 is higher than that in the Sample 3 (Example 7).

Of these Samples, the Sample 1 (Example 13) and the Samples 4 to 8 (Examples 14 to 18), which are made of a carbon composite of carbon particles having a predetermined amount of mesopores and fibrous carbon having a graphene structure have remarkably high capacity retention ratios. This may be explained such that since the fibrous carbon is present near the carbon particles having mesopores, the electrolyte solution-retaining property and ion conductivity at the carbon particle interface, in particular, in the mesopores are increased, the charge movement resistance and the diffusion resistance are reduced to be small, and hence the low-temperature characteristic is improved. Judging from these facts, the negative electrode active material according to the present invention has an excellent low-temperature characteristic.

### Example 19 and Comparative Example 8

### Manufacturing of Negative Electrode of Lithium-ion secondary Battery

Both surfaces of a copper expanded metal (manufactured by Nippon Metal Industry Co., Ltd.) having a thickness of 32 µm (porosity of 57%) were simultaneously coated with the negative electrode slurry 1 by a vertical type die coater for simultaneously both-side coating, and dried to obtain a negative electrode expanded metal electrode 1 having a total thickness of 206 µm.

6 parts by weight of an acetylene black powder, 5 parts by weight of an acrylate copolymer binder, 4 parts by weight of CMC, and 200 parts by weight of ion exchanged water were added to 92 parts by weight of the Sample 2, and sufficiently mixed by a mixing/agitating machine to obtain a negative slurry 10. Both surfaces of a copper expanded metal (manufactured by Nippon Metal Industry Co., Ltd.) having a thickness of 16 µm (porosity of 57%) were simultaneously coated with the negative electrode slurry 10 by a vertical type die coater for simultaneously both-side coating, and dried to obtain a negative electrode expanded metal electrode 2 having a total thickness of 215 µm.

### Manufacturing of Positive Electrode of Lithium-ion secondary Battery

Then, 100 parts by weight of a commercially available lithium cobaltate particle powder (LiCoO₂) having a particle diameter of 5 µm, and 5 parts by weight of a graphite powder were added to a solution obtained by dissolving 3.5 parts by weight of a polyvinylidene fluoride powder in 50 parts by weight of N-methyl pyrrolidone, and sufficiently mixed to obtain a positive electrode slurry 1. Both surfaces of an aluminum expanded metal (manufactured by Nippon Metal Industry Co., Ltd.) having a thickness of 38 µm (porosity of 45%) were simultaneously coated with an aqueous carbon conductive coating by a vertical type die coater for simultaneously both-side coating, and dried to obtain a positive electrode current collector having a conductive layer formed thereon.

A total thickness (sum of the current collector thickness and the conductor layer thickness) of the positive electrode current collector was 52 µm, and through-holes of the current collector were substantially filled with the conductive coating. Both surfaces of the positive electrode current collector were coated with the positive electrode slurry 1 one by one by a comma coater, and dried to prepare a positive electrode expanded metal electrode 1 of 189 µm thick.

### Manufacturing of Lithium-ion secondary Battery

The manufactured negative electrode expanded metal electrodes 1 and 2 each having a thickness of 52 µm were each cut into a rectangular sheet of 2.6 cm × 4.0 cm. The manufactured positive electrode expanded metal electrode 1 having a thickness of 189 µm was cut into a rectangular sheet of 2.4 cm × 3.8 cm. A polypropylene porous film of 25 µm thick was used for a separator. Welded parts (to be referred to as terminal welded parts) of the negative electrode current collector and the positive electrode current collector to the connection terminals were oppositely disposed and six sheets of negative electrodes and five sheets of positive electrodes were laminated, respectively.

The separators were located on the uppermost side and lowermost side of the lamination structure, and the four sides of the structure were fastened with a tape to thereby form electrode units 1 and 2. A metal lithium foil equivalent to 191 mAh/g to the weight of the Sample 1 in the negative electrode expanded metal electrode 1 was pressed onto a stainless steel mesh of 80 µm thick. A metal lithium foil equivalent to 223 mAh/g to the weight of the Sample 2 in the negative electrode expanded metal electrode 2 was pressed onto a stainless steel mesh of 80 µm thick.

Those metal lithium foils were put on the outermost sides of the electrode lamination units 1 and 2 while facing the negative electrode. Negative electrodes (six sheets) and the stainless steel meshes onto which the lithium metal sheets were pressed were brought into contact with each other by welding, whereby three-electrode lamination units 1 and 2 were obtained. In each unit, the negative electrode and the metal lithium foil were short-circuited.

Then, aluminum positive-electrode terminals of 5 mm wide × 30 mm long × 0.2 mm thick having sealing parts that had been heat sealed with sealant films were placed on the terminal welded parts (five sheets) of the positive electrode current collectors of the three-electrode lamination units 1 and 2, and ultrasonic-welded together. Nickel negative-electrode terminals of 5 mm wide × 30 mm long × 0.2 mm thick having sealing parts that had been heat sealed with sealant films were placed on the terminal welded parts (six sheets) of the negative electrode current collectors of the three-electrode lamination units 1 and 2, and resistance-welded together. The three-electrode lamination units were placed in two outer jacket films each deep-drawn to 60 mm (vertical) × 30 mm (lateral) × 1.3 mm (deep).

After two sides of the terminal part and one side of each outer jacket film were heat sealed, each unit was vacuum-impregnated with a solution (solution obtained by dissolving LiPF₆ at a concentration of 1 mol/L into a solvent mixture containing ethylene carbonate, diethyl carbonate and propylene carbonate at the weight ratio of 3:4: 1). Then, the remaining one side of each unit was heat sealed at reduced pressure and vacuum sealed to assemble each two cells of film type lithium-ion secondary batteries 1 (Example 19) and 2 (Comparative Example 8).

### Evaluation of Lithium-ion secondary Battery Characteristic

The cells were left to stand at room temperature for 14 days, and one cell was each disassembled. It was confirmed that no metal lithium foil remained. From this fact, it was considered that the amount of lithium ion of 191 mAh/g per unit weight of the Sample 1 in the negative electrode expanded metal electrode 1 was doped, and the amount of lithium ion of 223 mAh/g per unit weight of the Sample 2 in the negative electrode expanded metal electrode 2 was doped. The remaining film type lithium-ion secondary batteries 1 and 2 were charged at a constant current of 250 mA and at 25 °C till the cell voltage reached 4.2 V, and thereafter were charged for six hours by a constant current-constant voltage charging method in which a constant voltage of 4.2 V was applied.

Then, the batteries were discharged at a constant current of 125 mA till the cell voltage reached 3.0 V. Further, after charged in a similar manner, the cells were discharged at a constant current of 1250 mA till the cell voltage reached 3.0 V. The discharging capacity of each cell was compared with that at the time of 125 mA discharging to obtain a capacity retention ratio. The results are shown in Table 5.

**Table 5**

| | Lithium-ion secondary battery (Negative electrode active material) | Discharging capacity (mAh) | | Capacity retention ratio (%) |
|---|---|---|---|---|
| | | 125 mA | 1250 mA | |
| Example 19 | 1 (Sample 1) | 232 | 220 | 94.8 |
| Comparative Example 8 | 2 (Sample 2) | 225 | 198 | 88.0 |

In Example 19, the Sample 1 used was the carbon composite which contained 10.5% of the fibrous carbon having a graphene structure, and which had the volume of all mesopores of the fibrous carbon being within 0.005 to 1.0 cm³/g as well as the volume of the mesopores each with a pore diameter ranging from 100 to 400 Å being not less than 25% of the volume of all mesopores. The results shown in Table 5 indicate that when Example 9 is compared with Comparative Example 8 using the Sample 2 containing no fibrous carbon, Example 19 has high discharging capacity although it uses a less amount of metal lithium foil than that of Comparative Example 8. Further, the capacity retention ratio at high current density of the former is also higher than that of the latter.

This may be explained as follows. By the CVD effect of the reaction gas generated in the heat treatment process, the specific surface area of the core carbon particles lowers and the charging/discharging efficiency increases. In addition, since the fibrous carbon is present near the carbon particles having mesopores, the electrolyte solution-retaining property and ion conductivity at the carbon particle interface, in particular, in the mesopores are increased, whereby the charge movement resistance and the diffusion resistance are reduced to be small, and the output characteristic is improved. Judging from these facts, the negative electrode active material according to the present invention has an excellent output characteristic as a negative electrode active material for the lithium-ion secondary battery.

### Example 20 and Comparative Example 9

### Manufacturing of Negative Electrode of Lithium-ion capacitor

Negative electrode expanded metal electrodes 3 and 4 each having a total thickness of 94 µm were manufactured by using a copper expanded metal (manufactured by Nippon Metal Industry Co., Ltd.) having a thickness of 32 µm (porosity of 57%) in the same manner as the negative electrode expanded metal electrodes 1 and 2.

### Measurement of Capacitance Per Unit weight of Negative Electrodes Expanded Metal Electrodes 3 and 4

The negative electrode expanded metal electrodes 3 and 4 were cut out into electrode sheets each of 1.5 cm × 2.0 cm, and used as negative electrodes for evaluation. A metal lithium plate of 1.5 cm × 2.0 cm and having a thickness of 250 µm was used as a counter electrode. A separator was made of a polyethylene nonwoven fabric having a thickness of 50 µm. The lithium plates were placed on both sides of each of the negative electrode expanded metal electrodes 3 and 4, with the separators being interposed therebetween, whereby a test cell was assembled. A metal lithium was used for a reference electrode.

An electrolyte solution was a solution obtained by dissolving LiPF₆ at a concentration of 1.2 mol/L in propylene carbonate. Lithium ions were doped in amount of 600 mAh/g based on the negative electrode active material weight of the negative electrode expanded metal electrodes 3 and 4 at the charging current of 1 mA, followed by being discharged at the current 1 mA to 1.5 V. A capacitance per unit weight of each of the negative electrode expanded metal electrodes 3 and 4 was estimated from a discharging time during that the potential of the negative electrode changed by 0.2 V from the potential after one minute elapses from the start of the discharging operation. The capacitance of the negative electrode expanded metal electrode 3 was 4532 F/g, and the capacitance of the negative electrode expanded metal electrode 4 was 2893 F/g.

### Manufacturing of Positive Electrode of Lithium-ion capacitor

85 parts by weight of a commercially available activated carbon powder having a specific surface area of 2000 m²/g, 5 parts by weight of an acetylene black powder, 6 parts by weight of an acrylic resin binder, 4 parts by weight of CMC, and 200 parts of water were sufficiently mixed to obtain a positive electrode slurry 2. Both surfaces of an aluminum expanded metal (manufactured by Nippon Metal Industry Co., Ltd.) having a thickness of 35 µm (porosity of 50%) was coated with a non-aqueous carbon conductive coating (EB-815 manufactured by Acheson (Japan) Limited) by a spraying method, and dried thereby to obtain a positive electrode current collector having a conductive layer formed thereon.

A total thickness (sum of the current collector thickness and the conductor layer thickness) of the positive electrode current collector was 52 µm, and the through-holes of the current collector were substantially filled with the conductive coating. The positive electrode slurry 2 was coated over both surfaces of the positive electrode current collector by a roll coater, and dried and pressed to prepare a positive electrode expanded metal electrode 2 having a thickness after pressed of 202 µm.

### Measurement of Capacitance Per Unit Weight of Positive Electrode Expanded Metal Electrode 2

The positive electrode expanded metal electrode 2 was cut out into a sheet of 1.5 cm × 2.0 cm, and used as a positive electrode for evaluation. A metal lithium of 1.5 cm × 2.0cm and having a thickness of 200 µm was used as a counter electrode. A separator was made of a polyethylene nonwoven fabric having a thickness of 50 µm. The lithium plates were placed on both sides of the positive electrode expanded metal electrode 2, with the separators being interposed therebetween, whereby a test cell was assembled.

A metal lithium was used for a reference electrode. An electrolyte solution was a solution obtained by dissolving LiPF₆ at a concentration of 1.2 mol/L in propylene carbonate. The cell was charged at a charging current of 1 mA to 3.6 V, and then at a constant voltage. After a total charging time reached one hour, the cell was discharged at 1 mA to 2.5 V. A capacitance per unit weight of the positive electrode expanded metal electrode 2 was obtained from the discharging time between 3.5 V to 2.5V, and it was 141 F/g.

### Manufacturing of Lithium-ion capacitor

The manufactured negative electrode expanded metal electrodes 3 and 4 each having a thickness of 94 µm, and the manufactured positive electrode expanded metal electrode 2 having a thickness of 202 µm were used. The negative electrode expanded metal electrodes 3 and 4 were each cut out into a sheet of 6.0 cm × 7.5 cm (except the terminal welded parts). The positive electrode expanded metal electrode 2 was cut out into a sheet of 5.8 cm × 7.3 cm (except the terminal welded parts). A cellulose/rayon non-woven fabric of 35 µm thick was used as a separator.

The terminal welded parts of the positive electrode current collector and the negative electrode current collector were oppositely disposed. 20 pairs of the surfaces of the positive and negative electrodes, which face each other, were laminated and the outermost electrodes of the lamination structure were the negative electrodes. The separators were located on the uppermost side and lowermost side of the lamination structure, and the four sides of the structure were fastened with a tape, whereby electrode lamination units 3 and 4 were prepared.

A metal lithium foil equivalent to 300 mAh/g per weight of the negative electrode active material of each of the negative electrode expanded metal electrodes 3 and 4 was pressed against a stainless steel mesh of 80 µm thick to obtain a lithium electrode. The lithium electrodes were located on the upper part and the lower part of the electrode lamination unit, while facing the negative electrode of the outermost part. Negative electrodes (11 sheets) and the stainless steel meshes onto which the lithium metal sheets were pressed were brought into contact with each other by welding, whereby three-electrode lamination units 3 and 4 were formed. In each unit, the negative electrode and the metal lithium foil were short-circuited.

Aluminum positive-electrode terminals of 30 mm wide × 30 mm long × 0.2 mm thick having sealing parts that had been heat sealed with sealant films were placed on the terminal welded parts (ten sheets) of the positive electrode current collectors of the three-electrode lamination units 3 and 4, and ultrasonic-welded together. Copper negative-electrode terminals of 30 mm wide × 30 mm long × 0.2 mm thick having sealing parts that had been heat sealed with sealant films were placed on the terminal welded parts (11 sheets) of the negative electrode current collectors, and resistance-welded together.

The three-electrode lamination units were placed in two outer jacket films each deep-drawn to 75 mm (vertical) × 65 mm (lateral) × 5 mm (deep). After two sides of the terminal part and one side of each outer jacket film were heat sealed, each unit was vacuum-impregnated with a solution (solution obtained by dissolving LiPF₆ at a concentration of 1 mol/L into a solvent mixture containing ethylene carbonate, diethyl carbonate and propylene carbonate at the weight ratio of 3:4:1) as electrolyte solution. Then, the remaining one side of each unit was heat sealed at reduced pressure and vacuum sealed to assemble each three cells of film type lithium-ion capacitors 1 (Example 20) and 2 (Comparative Example 9).

### Evaluation of Cell Characteristic of Lithium-ion capacitor

The cells of the prepared film type lithium-ion capacitors 1 and 2 were left to stand at room temperature for 14 days, and each one cell was disassembled. It was confirmed that no metal lithium foil remained. From this fact, it was confirmed that lithium ions derived from the metal lithium foil were all doped into the negative electrode. The film type lithium-ion capacitors of the two cells were left to stand at 25°C and -20°C for 24 hours, and thereafter were charged at a constant current of 300 mA to 3.8 V. The cells were charged for one hour by a constant current-constant voltage charging method in which a constant voltage of 3.8 V was applied. Then, the cells were discharged at a constant current of 300 mA till the cell voltage reached 2.2 V. The 3.8-2.2 V cycle was repeated and a discharging capacity of the cell was measured at the third cycle. The measurement results of the discharging capacity at 25 °C and -20 °C, capacity retention ratios, and the energy density per volume are tabulated in Table 6.

**Table 6**

| | Lithium-ion capacitor (Negative electrode active material) | Discharging capacity (mAh) | | Capacity retention ratio (%) | Energy density (25 °C) (Wh/l) |
|---|---|---|---|---|---|
| | | 25 °C | -20 °C | | |
| Example 20 | 1 (Sample 1) | 344 | 305 | 88.7 | 21.3 |
| Comparative Example 9 | 2 (Sample 2) | 335 | 271 | 80.9 | 20.8 |

In Example 20, the Sample 1 used was the carbon composite which contained 10.5% of the fibrous carbon having a graphene structure, and which had the volume of all mesopores of the fibrous carbon being within 0.005 to 1.0 cm³/g as well as the volume of the mesopores each with a pore diameter ranging from 100 to 400 Å being not less than 25% of the volume of all mesopores. The results shown in Table 6 indicate that when Example 20 is compared with Comparative Example 9 using the Sample 2 containing no fibrous carbon, Example 20 has higher discharging capacity and higher capacity retention ratio at low temperature than that of Comparative Example 9.

This may be explained such that since the fibrous carbon is present near the carbon particles having mesopores, the electrolyte solution-retaining property and ion conductivity at the carbon particle interface, in particular, in the mesopores are increased, the charge movement resistance and the diffusion resistance are reduced to be small, and hence the low-temperature characteristic is improved. Judging from these facts, the negative electrode active material according to the present invention has an excellent low-temperature characteristic as the negative electrode active material for the lithium-ion capacitor.

In each one of the film type lithium-ion capacitors of the cells in Example 20 and Comparative Example 9, the positive electrode potential was measured after the positive electrode and the negative electrode were short-circuited. The measured potential of each cell was about 0.95, below 2.0 V. By doping the negative electrode and/or the positive electrode with lithium ions so that the potential at the positive electrode was 2.0 V or lower when the positive electrode and the negative electrode were short-circuited, the resultant lithium-ion capacitor had high energy density of 20 Wh/l or higher.

## Claims

1. A negative electrode active material for an electricity storage device of which the electrolytic solution is an aprotic organic solvent containing a lithium salt,
wherein the negative electrode active material is made of a carbon composite containing carbon particles as a core and a fibrous carbon having a graphene structure, the fibrous carbon is formed on the surfaces and/or the inside of the carbon particles, and
wherein the carbon composite has a volume of all mesopores within 0.005 cm³/g to 1.0 cm³/g, and
wherein a volume of the mesopores, each with a pore diameter ranging from 100 to 400 Å, is not less than 25% of the volume of all mesopores.

2. The negative electrode active material according to claim 1,
wherein the amount of the fibrous carbon ranges from 1% to 50% by weight of the carbon composite.

3. The negative electrode active material according to claim 1 or 2,
wherein a specific surface area of the carbon composite is within a range from 0.01 m²/g to 2000 m²/g.

4. The negative electrode active material according to any of claims 1 to 3,
wherein the carbon particles are made of at least one of soft carbon, hard carbon, graphite, and polyacene-based material.

5. The negative electrode active material according to any of claims 1 to 4,
wherein the fibrous carbon contains at least one of monolayer carbon nanotube, multilayer carbon nanotube, carbon nanofiber, carbon nanohorn, carbon microcoil, herringbone-type carbon fiber, and platelet-type carbon fiber.

6. The negative electrode active material according to any of claims 1 to 5,
wherein the fibrous carbon is a hollow carbon fiber having an outside diameter of 1 nm to 100 nm.

7. The negative electrode active material according to any of claims 1 to 6,
wherein the fibrous carbon is a hollow carbon fiber having a partition which partitions a hollow part of the fibrous carbon.

8. The negative electrode active material according to any of claims 1 to 7,
wherein the fibrous carbon has a herringbone structure in which the fibrous carbon has multiple walls and its lattice image is slanted with respect to a fiber axis.

9. The negative electrode active material according to claim 8,
wherein the multiple walls of the fibrous carbon are each 1 to 100 nm thick.

10. The negative electrode active material according to claim 8 or 9,
wherein the number of multiple walls is three or more.

11. The negative electrode active material according to any of claims 1 to 10,
wherein the fibrous carbon is formed by heat treating the carbon particles and/or their precursors at 600 °C to 2000 °C in the presence of a transition metal-containing compound.

12. The negative electrode active material according to claim 11,
wherein the transition metal is nickel and/or iron.

13. The negative electrode active material according to claim 11 or 12,
wherein the fibrous carbon is formed from a gas as a raw material, the gas being generated during the heat treatment.

14. The negative electrode active material according to claim 11 or 12,
wherein the fibrous carbon is formed by directly feeding a hydrocarbon gas from outside of the system or by feeding a gas containing hydrocarbon by using a carrier gas during the heat treatment.

15. The negative electrode active material according to any of claims 1 to 14,
wherein the root part of the fibrous carbon is bonded to the core carbon particle and/or its root part is separated from but located near the core carbon particle.

16. The negative electrode active material according to any of claims 1 to 15,
wherein the transition metal particles are wrapped in the tip of the fibrous carbon.

17. A method for manufacturing the negative electrode active material for an electricity storage device as defined in any of claims 1 to 16,
wherein carbon particles and/or their precursors are heat treated at 600 °C to 2000 °C in the presence of a transition metal-containing compound.

18. The method according to claim 16,
wherein the transition metal is nickel and/or iron.

19. A lithium-ion secondary battery,
wherein a negative electrode active material is the negative electrode active material for an electricity storage device defined in any of claims 1 to 16, and an electrolyte solution is an aprotic organic solvent containing a lithium salt.

20. A lithium-ion capacitor,
wherein an active material which allows lithium ions and/or anions to be reversibly doped thereinto and de-doped therefrom is used for a positive electrode active material,
wherein the negative electrode active material for an electricity storage device defined in any of claims 1 to 16 is used for a negative electrode active material, an electrolyte solution is an aprotic organic solvent containing a lithium salt, and
wherein a negative electrode and/or a positive electrode are pre-doped with lithium ions so that after the positive electrode and the negative electrode are short-circuited, potentials of the positive electrode and the negative electrode are each 2 V (relative to Li/Li+) or lower.
